Europäisches Patentamt

European Patent Office

Office européen des brevets

(19)

(11) **EP 1 512 992 A1**

(12) **EUROPÄISCHE PATENTANMELDUNG**

(43) Veröffentlichungstag:
   **09.03.2005 Patentblatt 2005/10**

(51) Int Cl.[7]: **G01V 8/22**

(21) Anmeldenummer: **04020486.9**

(22) Anmeldetag: **28.08.2004**

(84) Benannte Vertragsstaaten:
   **AT BE BG CH CY CZ DE DK EE ES FI FR GB GR HU IE IT LI LU MC NL PL PT RO SE SI SK TR**
   Benannte Erstreckungsstaaten:
   **AL HR LT LV MK**

(30) Priorität: **03.09.2003 DE 10340420**

(71) Anmelder: **Leuze electronic GmbH + Co KG**
   **73277 Owen/Teck (DE)**

(72) Erfinder:
   • **Argast, Martin**
     **72584 Hülben (DE)**
   • **Neuffer, Sven**
     **73277 Owen/Teck (DE)**

(74) Vertreter: **Ruckh, Rainer Gerhard, Dr.**
   **Fabrikstrasse 18**
   **73277 Owen/Teck (DE)**

(54) **Optischer Sensor**

(57)    Die Erfindung betrifft einen optischen Sensor (1) zur Erfassung von Objekten (6) in einem Überwachungsbereich mit einem Sendelichtstrahlen (3) emittierenden Sender (2), einem Empfangslichtstrahlen (4) empfangenden Empfänger (5) und einer Auswerteeinheit (9) zur Auswertung der Empfangssignale am Ausgang des Empfängers (5). Der Empfänger (5) besteht aus einer Mehrfachanordnung von Empfangselementen (5a). In einem Einlernvorgang wird mit den Sendelichtstrahlen (3) des Senders (2) ein den Überwachungsbereich begrenzendes Hintergrundobjekt (7) ausgeleuchtet, wobei die Pegel der Empfangssignale der Empfangselemente (5a), welche durch die vom Hintergrundobjekt (7) auf den Empfänger (5) zurückreflektierten Empfangslichtstrahlen (4) generiert werden, als Referenzsignalverlauf in der Auswerteeinheit (9) eingelernt werden. Nach erfolgtem Einlernvorgang wird in der Auswerteeinheit (9) eine Objektmeldung generiert, falls der Signalverlauf der Pegel der Empfangssignale der Empfangselemente (5a) vom Referenzsignalverlauf abweicht.

**Fig 1**

EP 1 512 992 A1

**Beschreibung**

Die Erfindung betrifft einen optischen Sensor gemäß dem Oberbegriff des Anspruchs 1.

Derartige optische Sensoren sind insbesondere als Reflexionslichtschranken ausgebildet. Diese weisen einen Sender und einen Empfänger auf, welche in einem gemeinsamen Gehäuse an einem Rand eines Überwachungsbereichs angeordnet sind. Der Sender besteht aus einer Punktlichtquelle wie zum Beispiel einer Leuchtdiode. Der Empfänger besteht aus einer Fotodiode oder dergleichen. Am gegenüberliegenden Rand des Überwachungsbereichs ist ein Retroreflektor angeordnet, der Bestandteil des optischen Sensors ist. Bei freiem Überwachungsbereich gelangen die vom Sender emittierten Sendelichtstrahlen umgehend zum Retroreflektor und werden von dort als Empfangslichtstrahlen zum Empfänger zurückreflektiert. Bei einem Objekteingriff im Überwachungsbereich gelangen die Sendelichtstrahlen nicht mehr zum Retroreflektor, sondern werden vom Objekt zum Empfänger reflektiert. Zur Generierung eines binären Objektfeststellungssignals wird in der Auswerteeinheit der Pegel des Empfangssignals mit einem Schwellwert bewertet. Die Schaltzustände des Objektfeststellungssignals geben an, ob sich ein Objekt im Überwachungsbereich befindet oder nicht.

Nachteilig bei derartigen optischen Sensoren ist, dass der Retroreflektor als zusätzlicher Bestandteil des optischen Sensors relativ zum Sender und Empfänger ausgerichtet werden muss.

Weiterhin ist nachteilig, dass mit derartigen optischen Sensoren nur eine pauschale Information erhalten wird, ob sich ein Objekt in dem Überwachungsbereich befindet oder nicht. Weitere Informationen über das Objekt werden nicht erhalten.

Der Erfindung liegt die Aufgabe zugrunde, einen optischen Sensor der eingangs genannten Art bereitzustellen, welcher bei geringem konstruktivem Aufwand eine möglichst hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optischer Sensor dient zur Erfassung von Objekten in einem Überwachungsbereich und weist einen Sendelichtstrahlen emittierenden Sender, einen Empfangslichtstrahlen empfangenden Empfänger und eine Auswerteeinheit zur Auswertung der Empfangssignale am Ausgang des Empfängers auf. Der Empfänger besteht aus einer Mehrfachanordnung von Empfangselementen. In einem Einlernvorgang wird mit den Sendelichtstrahlen des Senders ein den Überwachungsbereich begrenzendes Hintergrundobjekt ausgeleuchtet. Die Pegel der Empfangssignale der Empfangselemente, welche durch die vom Hintergrundobjekt auf den Empfänger zurückreflektierten Empfangslichtstrahlen generiert werden, werden als Referenzsignalverlauf in der Auswerteeinheit eingelernt. Nach erfolgtem Einlernvorgang wird in der Auswerteeinheit eine Objektmeldung generiert, falls der Signalverlauf der Pegel der Empfangssignale der Empfangselemente vom Referenzsignalverlauf abweicht.

Der Grundgedanke der Erfindung besteht darin, dass durch Einlernen des Referenzsignalverlaufs für die Empfangselemente des Empfängers ein beliebiges Hintergrundobjekt mit beliebiger Beschaffenheit der Oberfläche als Begrenzung des Überwachungsbereichs gewählt werden kann. Somit braucht kein Retroreflektor oder dergleichen als zusätzliches Element des optischen Sensors als Begrenzung des Überwachungsbereichs vorgesehen werden. Weiterhin entfällt auch die Ausrichtung des optischen Sensors gegenüber der Begrenzung des Überwachungsbereichs, da das Hintergrundobjekt zum Einlernen des Referenzsignalverlaufs beliebig zum optischen Sensor orientiert sein kann. Vorteilhaft hierbei ist, wenn mit den vom Hintergrundobjekt zurückreflektierten Empfangslichtstrahlen eine möglichst vollständige Ausleuchtung des Empfängers erfolgt.

Durch den Vergleich des Referenzsignalverlaufs mit dem aktuellen Signalverlauf der Pegel der Empfangssignale der Empfangselemente wird ein ausgedehnter Bereich des Hintergrundobjekts als Referenzfläche zur Objektdetektion bewertet, wodurch eine besonders sichere Objektdetektion gewährleistet ist, das heißt der optische Sensor weist eine hohe Nachweisempfindlichkeit auf.

Weiterhin ist vorteilhaft, dass neben einer bloßen Anwesenheitskontrolle auch das Eintauchen eines Objektes in den Überwachungsbereich, insbesondere dessen Eintauchrichtung und Eintauchtiefe, erfasst werden kann.

In einer vorteilhaften Ausführungsform der Erfindung wird mittels einer Strahlformungsoptik aus den Sendelichtstrahlen ein Strahlungsband gebildet, welches zu einer breiten Ausleuchtung des Hintergrundobjekts dient. Die dabei vom Hintergrundobjekt reflektierten Empfangslichtstrahlen führen dann zu einer Ausleuchtung des Empfängers. Mit dieser Anordnung wird ein breiter Bereich der Oberfläche des Hintergrundobjekts zur Generierung des Referenzsignalverlaufs ausgenutzt.

Zur Erhöhung des Kontrastes des Referenzsignalverlaufs kann in einer bevorzugten Ausgestaltung mittels einer Streifenblende das Strahlungsband der Sendelichtstrahlen in Streifen unterteilt werden.

In einer alternativen Ausgestaltung der Erfindung können die Sendelichtstrahlen mit einem Schwingspiegel periodisch abgelenkt werden, so dass mit den abgelenkten Sendelichtstrahlen ein dem Strahlungsband entsprechender Bereich auf der Oberfläche des Hintergrundobjekts ausgeleuchtet wird. Auch hier kann ein Kontrastmuster auf dem Hintergrundobjekt erzeugt werden, um die Nachweisempfindlichkeit des optischen Sensors zu steigern. Hierzu erfolgt eine zyklische Austastung des Senders, das heißt der Sender wird innerhalb vorgegebener Zeitintervalle innerhalb einer Periode der Ablenkbewegung des Schwingspiegels deaktiviert.

Anstelle eines linienförmigen kontinuierlichen Bereichs des Hintergrundobjekts kann dieses auch punktuell mit den Sendelichtstrahlen beleuchtet werden, wobei in diesem Fall der Referenzsignalverlauf entsprechend der punktförmigen Beleuchtung des Hintergrundobjekts lokale Pegelmaxima der Pegel der Empfangselemente aufweist. Zur Objektdetektion werden dann die Höhen und Lagen dieser Pegelmaxima bewertet. Durch diese Signalauswertung ist eine sichere Objektdetektion gewährleistet, wobei durch Bewertung der einzelnen Pegelmaxima in besonders einfacher Weise die Eintauchtiefe und Eintauchrichtung eines in den Überwachungsbereich eindringenden Objekts ermittelt werden kann.

Mit der Filterung der Empfangssignale gemäß den Ansprüchen 11 und 12 können durch Störsignale hervorgerufene Signalspitzen in den Signalverlauf eliminiert werden, ohne dass die Kantenlagen in dem Signalverlauf, die die Lage von Objekten definieren, beeinträchtigt werden. Mit dieser Filterung wird somit die Nachweisempfindlichkeit des erfindungsgemäßen optischen Sensors erheblich erhöht.

Die Erfindung wird im Nachstehenden anhand der Zeichnungen erläutert. Es zeigen:

Figur 1: Blockschaltbild eines Ausführungsbeispiels des erfindungsgemäßen optischen Sensors.

Figur 2a: Erstes Ausführungsbeispiel der Optikkomponenten des optischen Sensors gemäß Figur 1 bei kontrastreichem Hintergrundobjekt.

Figur 2b: Referenzsignalverlauf für die Anordnung gemäß Figur 2a.

Figur 3a: Zweites Ausführungsbeispiel der Optikkomponenten des optischen Sensors gemäß Figur 1 für einen homogenen Hintergrund.

Figur 3b: Referenzsignalverlauf für die Anordnung gemäß Figur 3a.

Figur 4a: Anordnung gemäß Figur 3a bei einem in den Überwachungsbereich eintauchendem Objekt.

Figur 4b: Signalverlauf für die Anordnung gemäß Figur 4a.

Figur 5a: Drittes Ausführungsbeispiel der Optikkomponenten des optischen Sensors gemäß Figur 1.

Figur 5b: Referenzsignalverlauf für die Anordnung gemäß Figur 6a.

Figur 6a: Variante der Anordnung gemäß Figur 5a.

Figur 6b: Referenzsignalverlauf für die Anordnung gemäß Figur 6a.

Figur 6c: Signalverlauf für die Anordnung gemäß Figur 6a bei einem Objekteingriff.

Figur 7a: Viertes Ausführungsbeispiel der Optikkomponenten des optischen Sensors.

Figur 7b: Referenzsignalverlauf für die Anordnung gemäß Figur 7a.

Figur 8: Zeitdiagramme von Signalverläufen bei der Filterung der Empfangssignale im Empfänger des optischen Sensors.

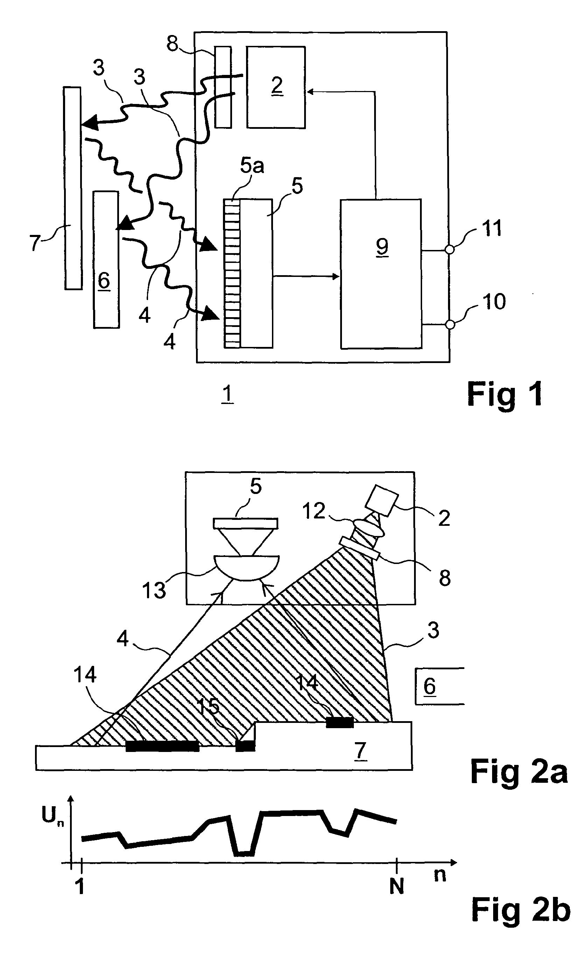

Figur 1 zeigt ein Blockschaltbild eines Ausführungsbeispiels des erfindungsgemäßen optischen Sensors 1. Der optische Sensor 1 weist einen Sender 2 auf, der von einer Leuchtdiode oder dergleichen gebildet ist und welcher Sendelichtstrahlen 3 in einen Überwachungsbereich aussendet. Der optische Sensor 1 weist weiterhin einen Empfangslichtstrahlen 4 empfangenden Empfänger 5 auf. Der Empfänger 5 besteht aus einer Mehrfachanordnung von Empfangselementen 5a. Im vorliegenden Fall ist der Empfänger 5 von einer Empfangszeile, insbesondere einer CCD-Zeile oder einer CMOS-Zeile gebildet.

Mit dem optischen Sensor 1 erfolgt eine Detektion von Objekten 6, die im Überwachungsbereich angeordnet sind. Der Überwachungsbereich ist vor einem Hintergrundobjekt 7 beliebiger Oberflächenbeschaffenheit angeordnet. Das Hintergrundobjekt 7 kann beispielsweise von einer Wand eines Gebäudes oder einer Maschine gebildet sein.

Die Objektdetektion erfolgt durch Vergleich der aktuell ermittelten Empfangssignale der Empfangselemente 5a mit Referenzwerten, die durch Messung gegen das Hintergrundobjekt 7 bei freiem Überwachungsbereich während eines Einlernvorgangs ermittelt werden.

Damit ein möglichst großer Bereich der Oberfläche des Hintergrundobjekts 7 von den Sendelichtstrahlen 3 ausgeleuchtet wird, werden diese mit einer Strahlformungsoptik 8, beispielsweise einer Zylinderlinse oder einer Streufolie, zu einem Strahlungsband aufgeweitet. Die Längsachse des Strahlungsbandes verläuft dabei in Richtung der Längsachse des Empfängers 5, so dass die am Hintergrundobjekt 7 zurückreflektierten Empfangslichtstrahlen 4 möglichst vollständig auf die Empfangszeile abgebildet werden.

Die Ansteuerung des Senders 2 sowie die Auswertung der Empfangssignale der einzelnen Empfangselemente 5a erfolgt in einer Auswerteeinheit 9, die von einem Microcontroller oder dergleichen gebildet ist. In Abhängigkeit der Empfangssignale wird ein Objektfeststellungssignal generiert. Dieses Objektfeststellungssignal kann als binäres Schaltsignal ausgebildet sein, dessen Schaltzustände angeben, ob sich ein Objekt 6 im Überwachungsbereich befindet oder nicht. Das binäre Schaltsignal ist über einen Schaltausgang 10 ausgebbar. Weiterhin können Objektinformationen wie die Eintauchrichtung und Eintauchtiefe eines Objektes 6 in den Überwachungsbereich in der Auswerteeinheit 9 ermittelt und als weiteres Objektfeststellungssignal über eine serielle Schnittstelle 11 ausgegeben werden.

Figur 2a zeigt eine erste Optikanordnung des optischen Sensors 1 gemäß Figur 1. Dem Sender 2 ist ein Senderkollimator 12 zur Kollimierung der Sendelichtstrahlen 3 und die Strahlformungsoptik 8 zur Erzeugung des Strahlungsbandes aus den Sendelichtstrahlen 3 nachgeordnet. Dem Empfänger 5 ist eine Empfangsoptik 13 zur Fokussierung der Empfangslichtstrahlen 4 auf die Empfangselemente 5a vorgeordnet.

Figur 2a zeigt die Anordnung des optischen Sensors 1 bei freiem Strahlengang und vor einem kontrastreichen Hintergrundobjekt 7. Der Kontrast wird im vorliegenden Fall durch Bedruckungen 14 auf der Oberfläche des Hintergrundobjekts 7 sowie einem Schatten 15 an einer Kante des Hintergrundobjekts 7 bei Beleuchtung mit den Sendelichtstrahlen 3 erhalten.

Bei dem in Figur 2a dargestellten freien Überwachungsbereich wird ein Einlernvorgang durchgeführt, der beispielsweise durch Eingabe eines Steuerbefehls über die serielle Schnittstelle 11 in der Auswerteeinheit 9 des optischen Sensors 1 ausgelöst wird. Während des Einlernvorgangs wird das den Überwachungsbereich begrenzende Hintergrundobjekt 7 mit den Sendelichtstrahlen 3 abgetastet. Die dabei vom Hintergrundobjekt 7 zurückreflektierten Empfangslichtstrahlen 4 generieren Empfangssignale $U_n$ an den Ausgängen der einzelnen Empfangselemente 5a n = 1, ... N des Empfängers 5. Der Verlauf der Empfangssignale $U_n$ über den einzelnen Empfangselemente 5a n = 1, ... N wird in der Auswerteeinheit 9 als Referenzsignalverlauf abgespeichert. Dieser Referenzsignalverlauf ist in Figur 2b dargestellt. Damit ist der Einlernvorgang abgeschlossen.

In der darauffolgenden Betriebsphase werden die Empfangssignale der einzelnen Empfangselemente 5a als Signalverlauf mit dem Referenzsignalverlauf verglichen. Stimmt der Referenzsignalverlauf mit dem Signalverlauf innerhalb vorgegebener Toleranzgrenzen überein, so liegt ein freier Überwachungsbereich vor und es wird ein entsprechendes Schaltsignal über den Schaltausgang 10 ausgegeben. Dringt jedoch ein Objekt 6 in den Überwachungsbereich ein, so wird durch dieses das Hintergrundobjekt 7 zumindest teilweise abgedeckt, so dass dann der aktuelle Signalverlauf mit dem Referenzsignalverlauf nicht mehr übereinstimmt. Dann wird in der Auswerteeinheit 9 eine Objektmeldung generiert, die als binäres Schaltsignal über den Schaltausgang 10 oder über die serielle Schnittstelle 11 ausgegeben wird.

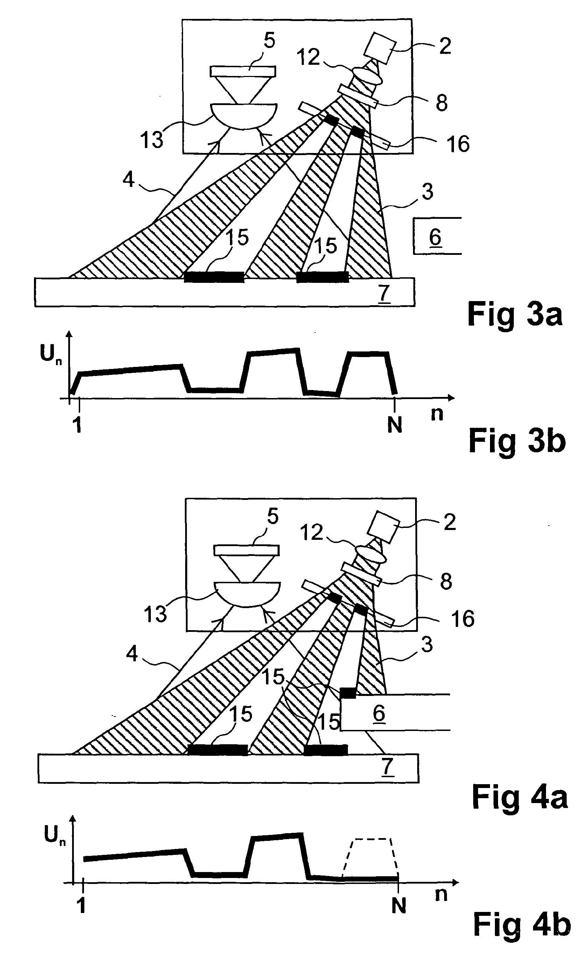

Figur 3a zeigt eine Optikanordnung des optischen Sensors 1, die im Wesentlichen der Anordnung gemäß Figur 2a entspricht. Im Unterschied zur Ausführungsform gemäß Figur 2a ist bei der Anordnung gemäß Figur 3a zusätzlich eine Streifenblende 16 vorgesehen. Mit dieser wird dem Strahlungsband der Sendelichtstrahlen 3 ein Streifenmuster aufgeprägt. Dadurch entstehen Schatten 15 auf der Oberfläche des Hintergrundobjekts 7, welche ein Kontrastmuster bilden. Diese Ausführungsform eignet sich für kontrastarme Hintergrundobjekte 7, da durch das Kontrastmuster, welches durch die Streifenblende 16 erzeugt wird, ein Referenzsignalverlauf mit einem signifikanten, variierendem Pegelverlauf, wie in Figur 3b dargestellt, erhalten wird. Dieser Referenzsignalverlauf, der während des Einlernvorganges bei freiem Überwachungsbereich erhalten wird, ist in Figur 3b dargestellt.

Figur 4a zeigt die Anordnung gemäß Figur 3a bei einem Objekteingriff in den Überwachungsbereich. Durch diesen Objekteingriff weicht der bei der Objektdetektion erhaltene, in Figur 4b dargestellte Signalverlauf der Empfangssignale der Empfangselemente 5a vom Referenzsignalverlauf ab. Durch die ortsaufgelöste Auswertung der Empfangssignale der Empfangselemente 5a kann dabei nicht nur die Anwesenheit des Objektes 6, sondern auch dessen Eintauchrichtung und Eintauchtiefe im Überwachungsbereich festgestellt werden.

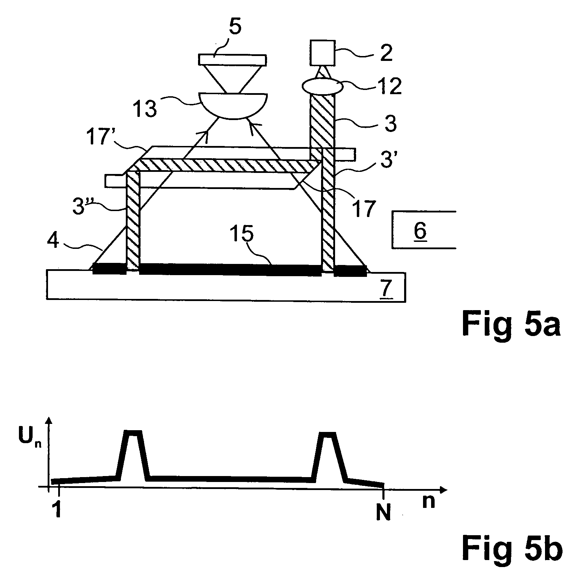

Figur 5a zeigt eine weitere Ausführungsform einer Optikanordnung für den optischen Sensor 1 gemäß Figur 1. In diesem Fall werden mittels einer von zwei Umlenkprismen 17, 17' gebildeten Optik die vom Sender 2 ermittelten und von dem Senderkollimator 12 kollimierten Sendelichtstrahlen 3 in zwei Teilstrahlen 3',3" aufgeteilt. Die Teilstrahlen 3',3" sind seitlich versetzt zur optischen Achse des Empfängers 5 auf das Hintergrundobjekt 7 gerichtet und generieren dort ein Kontrastmuster bestehend aus zwei räumlich begrenzten Lichtflecken und dazwischen liegenden Schattenbereichen, in Figur 5a als Schatten 15 bezeichnet.

Wie aus Figur 5a ersichtlich sind die Umlenkspiegel derartig angeordnet, dass mit diesem eine Aufteilung der Sendelichtstrahlen 3 in parallel zueinander verlaufende Teilstrahlen 3',3" erfolgt. Der mit den Teilstrahlen 3',3" beleuchtete Teil der Oberfläche führt zu dem in Figur 5b dargestellten Referenzsignalverlauf. Entsprechend der beiden Lichtflecke der Teilstrahlen weist der Referenzsignalverlauf zwei lokale Pegelschwerpunkte auf. Bei einem in den Überwachungsbereich eintauchenden Objekt 6 wird ein gegenüber dem Referenzsignalverlauf veränderter Signalverlauf erhalten, wodurch das Objekt 6 detektiert wird.

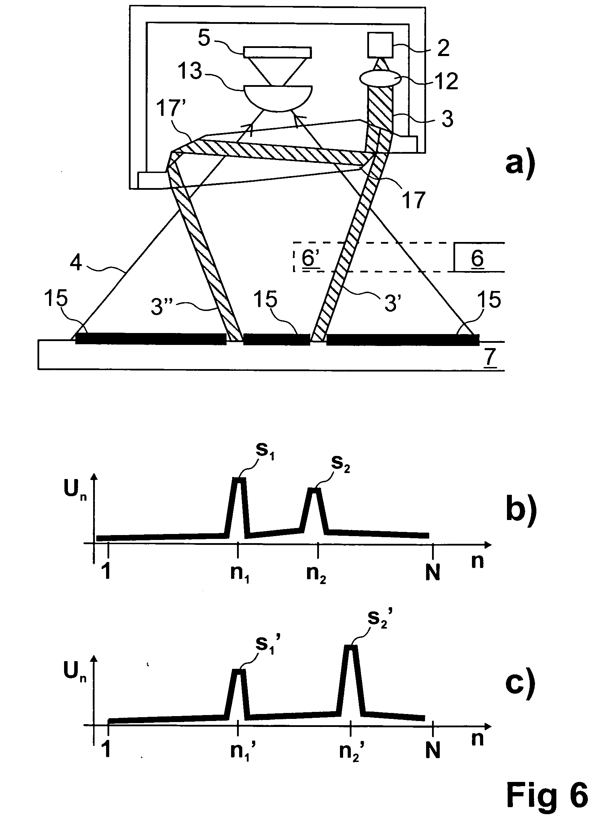

Figur 6a zeigt eine vorteilhafte Variante der Ausführungsform gemäß Figur 5a. Die Umlenkprismen 17, 17' sind in diesem Fall derart modifiziert, dass nun die aus den Sendelichtstrahlen 3 generierten Teilstrahlen 3',3" zu größeren Distanzen zum optischen Sensor 1 hin aufeinander zulaufen.

Auch in diesem Fall wird bei dem Einlernvorgang ein Referenzsignalverlauf mit zwei Pegelschwerpunkten erhalten (Figur 6b). Dabei wird in der Auswerteeinheit 9 wieder der Referenzsignalverlauf abgespeichert, insbesondere die Lagen $n_1$ und $n_2$ der Pegelschwerpunkte auf der Empfangszeile sowie deren maximale Pegel s1 und s2.

Dringt wie in Figur 6a schematisch ein Objekt 6 in den Überwachungsbereich ein, so wird durch die aufeinander zulaufenden Strahlachsen der Teilstrahlen in dem registrierten Signalverlauf (Figur 6c) nicht nur die maximalen Pegel s1', s2' gegenüber s1 und s2 verändert, sondern auch eine Verschiebung deren Lagen $n_1$', $n_2$' auf der Emp- fangszeile. Durch Auswertung beider Kenngrößen ist eine sichere Objektdetektion gewährleistet.

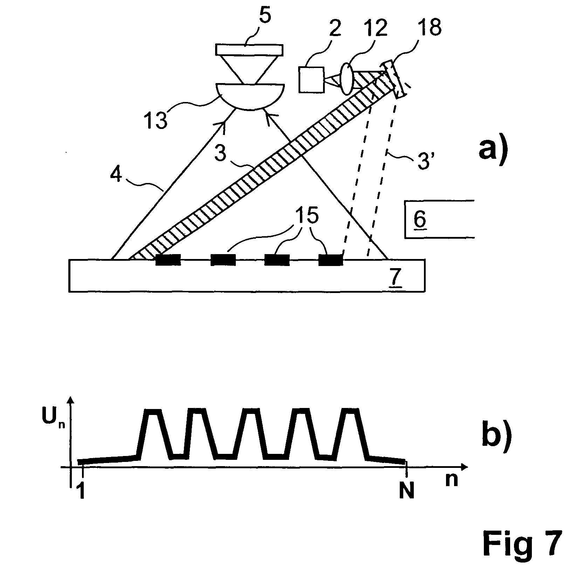

Figur 7a zeigt eine weitere Ausführungsform des optischer Sensors 1. Dem Sender 2 ist wiederum ein Senderkollimator 12 zugeordnet, dem Empfänger 5 ist eine Empfangsoptik 13 zugeordnet. Die Strahlaufweitung der Sendelichtstrahlen 3 erfolgt in diesem Fall durch einen Scanvorgang mittels eines eine periodische Schwingbewegung ausführenden, motorisch getriebenen Schwingspiegels 18. Durch den Schwingspiegel 18 werden die Sendelichtstrahlen 3 in Richtung der Längsachse des Empfängers 5 entlang einer Abtastlinie periodisch abgelenkt. Im einfachsten Fall wird der mit der Abtastlinie ausgeleuchtete Bereich des Hintergrundobjekts 7 auf den Empfänger 5 zur Generierung des Referenzsignalverlaufs abgebildet. Bei dem in Figur 7a dargestellten Fall wird zusätzlich ein Kontrastmuster auf dem Hintergrundobjekt 7 in Form von ausgeleuchteten Bereichen, getrennt durch Schatten 15, generiert. Hierzu wird der Sender 2 während vorgegebener Zeitintervalle innerhalb einer Periode der Ablenkbewegung des Schwingspiegels 18 deaktiviert. Dabei sind die Zeitintervalle der Deaktivierung des Senders 2 in den einzelnen Perioden identisch gewählt, so dass ein stehendes Lichtstreifenmuster wie in Figur 7a dargestellt generiert wird. Der entsprechende Referenzsignalverlauf ist in Figur 7b dargestellt.

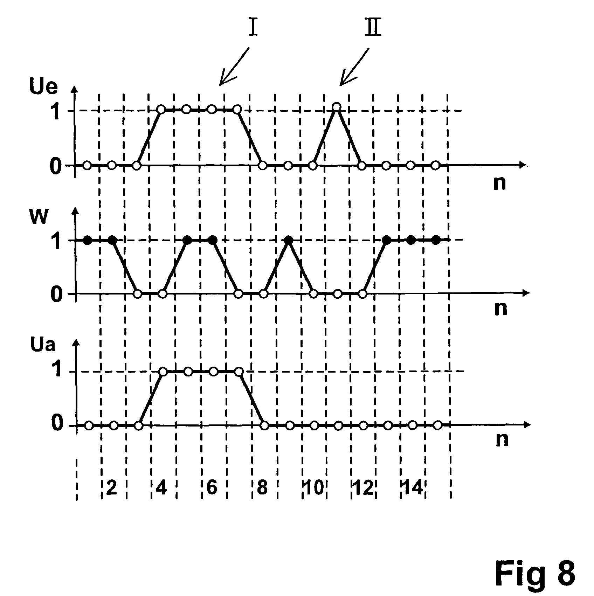

Figur 8 zeigt die Signalverläufe bei der Filterung der Empfangssignale mittels eines in der Auswerteeinheit 9 implementierten Filteralgorithmus als Bestandteil eines Tiefpassfilters. Das obere Diagramm zeigt die ungefilterten Empfangssignale Ue an den Ausgängen der einzelnen Empfangselemente 5a n = 1, ... N. Im vorliegenden Fall enthält das Empfangssignal einen Nutzsignalanteil I, dessen Kanten beispielsweise die Lagen von Objektkanten definieren. Weiterhin enthält das Empfangssignal eine Störspitze II, die durch Fremdlichteinstrahlung oder lokale Spiegelreflexe verursacht sein kann.

Zur Filterung der Empfangssignale wird in der Auswerteeinheit 9 die im zweiten Diagramm in Figur 8 dargestellte Wichtungsfunktion W gebildet. Die mit der Wichtungsfunktion W gefilterten Empfangssignale als Ausgangsspannung Ua sind im unteren Diagramm in Figur 8 dargestellt.

Die Ausgangsspannung Ua wird berechnet, indem mit Hilfe der Wichtungsfunktion W der Mittelwert aus den benachbarten Messwerten gebildet wird. Die Wichtung für Messwerte, deren Nachbarmesswerte stark abweichen, haben eine niedrige Wichtung, was an Kanten des Signalverlaufes und bei Störspitzen der Fall ist. Wird der zu berechnende Messwert von keinem Nachbar mit ähnlichem Pegelwert gestützt, wird er weitgehend unterdrückt, wodurch die schmale Störspitze im Signalverlauf der Ausgangsspannung Ua nicht mehr erscheint. Ein Sprung im Signalverlauf bleibt jedoch mit der ursprünglichen Flankensteilheit erhalten, was für die weitere Auswertung wichtig ist, das heißt der Nutzsignalanteil wird durch die Filterung nicht verfälscht. Im einfachsten Fall werden nur die unmittelbar benachbarten Messwerte einbezogen. Dies erfolgt gemäß folgender Beziehung:

$$Ua_n = (W_{n-1} * U_{n-1} + W_n * U_n + W_{n+1} * U_{n+1}) / (W_{n-1} + W_n + W_{n+1})$$

Werden weitere Nachbarmesswerte einbezogen, können auch breitere Störspitzen unterdrückt werden.

Bezugszeichenliste

| | |
|---|---|
| (1) | Optischer Sensor |
| (2) | Sender |
| (3) | Sendelichtstrahlen |
| (3',3") | Teilstrahlen |
| (4) | Empfangslichtstrahlen |

(5)      Empfänger
(5a)     Empfangselemente
(6)      Objekt
(7)      Hintergrundobjekt
(8)      Strahlformungsoptik
(9)      Auswerteeinheit
(10)     Schaltausgang
(11)     Serielle Schnittstelle
(12)     Senderkollimator
(13)     Empfangsoptik
(14)     Bedruckung
(15)     Schatten
(16)     Streifenblende
(17, 17')  Umlenkprismen
(18)     Schwingspiegel

## Patentansprüche

1. Optischer Sensor zur Erfassung von Objekten in einem Überwachungsbereich mit einem Sendelichtstrahlen emittierenden Sender, einem Empfangslichtstrahlen empfangenden Empfänger und einer Auswerteeinheit zur Auswertung der Empfangssignale am Ausgang des Empfängers, **dadurch gekennzeichnet, dass** der Empfänger (5) aus einer Mehrfachanordnung von Empfangselementen (5a) besteht, dass in einem Einlernvorgang mit den Sendelichtstrahlen (3) des Senders (2) ein den Überwachungsbereich begrenzendes Hintergrundobjekt (7) ausgeleuchtet wird, wobei die Pegel der Empfangssignale der Empfangselemente (5a), welche durch die vom Hintergrundobjekt (7) auf den Empfänger (5) zurückreflektierten Empfangslichtstrahlen (4) generiert werden, als Referenzsignalverlauf in der Auswerteeinheit (9) eingelernt werden, und dass nach erfolgtem Einlernvorgang in der Auswerteeinheit (9) eine Objektmeldung generiert wird, falls der Signalverlauf der Pegel der Empfangssignale der Empfangselemente (5a) vom Referenzsignalverlauf abweicht.

2. Optischer Sensor nach Anspruch 1, **dadurch gekennzeichnet, dass** der Empfänger (5) von einer Empfangszeile gebildet ist.

3. Optischer Sensor nach Anspruch 2, **dadurch gekennzeichnet, dass** die vom Sender (2) emittierten Sendelichtstrahlen (3) ein in Längsrichtung der Empfangszeile aufgeweitetes Strahlungsband bilden.

4. Optischer Sensor nach Anspruch 3, **dadurch gekennzeichnet, dass** die vom Sender (2) emittierten Sendelichtstrahlen (3) mittels einer Strahlformungsoptik (8) zum Strahlungsband aufgeweitet werden.

5. Optischer Sensor nach einem der Ansprüche 2 - 4, **dadurch gekennzeichnet, dass** zur Generierung eines Kontrastmusters auf dem Hintergrundobjekt (7) das Strahlungsband der Sendelichtstrahlen (3) mittels einer Streifenblende (16) in Streifen unterteilt ist.

6. Optischer Sensor nach Anspruch 2, **dadurch gekennzeichnet, dass** vom Sender (2) emittierte kollimierte Sendelichtstrahlen (3) mittels einer Optik in zwei Teilstrahlen aufgeteilt werden, welche seitlich versetzt zur optischen Achse des Empfängers (5) auf das Hintergrundobjekt (7) gerichtet sind.

7. Optischer Sensor nach Anspruch 6, **dadurch gekennzeichnet, dass** die Strahlachsen der Teilstrahlen zu größeren Distanzen zum Sender (2) hin aufeinander zulaufen.

8. Optischer Sensor nach Anspruch 2, **dadurch gekennzeichnet, dass** zur Strahlweitung der Sendelichtstrahlen (3) dem Sender (2) ein Schwingspiegel (18) nachgeordnet ist, mittels dessen die Sendelichtstrahlen (3) periodisch abgelenkt werden.

9. Optischer Sensor nach Anspruch 8, **dadurch gekennzeichnet, dass** die Ablenkbewegung des Schwingspiegels (18) in Längsrichtung der Empfangszeile erfolgt.

10. Optischer Sensor nach einem der Ansprüche 8 oder 9, **dadurch gekennzeichnet, dass** zur Generierung eines Kontrastmusters auf dem Hintergrundobjekt (7) der Sender (2) während vorgegebener Zeitintervalle innerhalb einer Periode der Ablenkbewegung des Schwingspiegels (18) deaktiviert wird.

11. Optischer Sensor nach einem der Ansprüche 1 - 10, **dadurch gekennzeichnet, dass** in der Auswerteeinheit (9) ein Filter zur Elimination von Störspitzen im Signalverlauf der Empfangssignale der Empfangselemente (5a) vorgesehen ist.

12. Optischer Sensor nach Anspruch 11, **dadurch gekennzeichnet, dass** zur Filterung des Signalverlaufs in dem Filter ein gewichteter Mittelwert des Empfangssignals eines Empfangselements (5a) und seiner nächsten Nachbarn gebildet wird.

**Fig 1**

**Fig 2a**

**Fig 2b**

**Fig 3a**

**Fig 3b**

**Fig 4a**

**Fig 4b**

**Fig 5a**

**Fig 5b**

**Fig 6**

**Fig 7**

Fig 8

**Europäisches**
**Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 199 38 639 A (PILZ GMBH & CO) 22. Februar 2001 (2001-02-22) * Spalte 10, Zeile 39 - Spalte 11, Zeile 47 * * Spalte 12, Zeile 18 - Zeile 63 * * Spalte 13, Zeile 16 - Zeile 36 * * Spalte 14, Zeile 67 - Spalte 15, Zeile 41 * * Abbildungen 1,3,6-10,18,19 * ----- | 1-4,6,7 | G01V8/22 |
| X | DE 100 33 608 A (PILZ GMBH & CO) 7. Februar 2002 (2002-02-07) * Spalte 3, Zeile 2 - Zeile 15 * * Spalte 3, Zeile 61 - Zeile 63 * * Spalte 4, Zeile 4 - Zeile 17 * * Spalte 5, Zeile 6 - Zeile 8 * * Spalte 6, Zeile 23 - Spalte 7, Zeile 3 * * Spalte 7, Zeile 23 - Zeile 35 * * Spalte 7, Zeile 44 - Spalte 8, Zeile 9 * * Spalte 9, Zeile 7 - Zeile 14 * * Abbildungen 1-4 * ----- | 1-4,8,9 | |
| X | DE 100 55 689 A (PEPPERL & FUCHS VISOLUX GMBH) 16. Mai 2002 (2002-05-16) * Spalte 2, Zeilen 61,62 * * Spalte 3, Zeile 3 - Zeile 5 * * Spalte 3, Zeile 41 - Spalte 4, Zeile 13 * * Abbildungen 1,2 * ----- | 1,2 | RECHERCHIERTE SACHGEBIETE (Int.Cl.7) G01V G01B G01S |
| X | DE 101 13 413 A (SPITZLEY ALFRED) 26. September 2002 (2002-09-26) * Spalte 1, Zeilen 10,11 * * Spalte 1, Zeile 35 - Zeile 55 * * Spalte 2, Zeile 14 - Zeile 45 * * Spalte 3, Zeile 43 - Zeile 58 * * Abbildungen 4,5 * ----- -/-- | 1,2 | |

Der vorliegende Recherchenbericht wurde für alle Patentansprüche erstellt

| Recherchenort | Abschlußdatum der Recherche | Prüfer |
|---|---|---|
| München | 12. November 2004 | Schneiderbauer, K |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

# EP 1 512 992 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 246 148 A (SICK AG) 2. Oktober 2002 (2002-10-02) * Spalte 1, Zeile 51 - Zeile 58 * * Spalte 2, Zeile 34 - Zeile 36 * * Spalte 6, Zeile 13 - Zeile 33 * * Abbildung 1 * ----- | 1,2 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 12. November 2004 | Schneiderbauer, K |

EP 1 512 992 A1

## ANHANG ZUM EUROPÄISCHEN RECHERCHENBERICHT
## ÜBER DIE EUROPÄISCHE PATENTANMELDUNG NR.    EP 04 02 0486

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 19938639 | A | 22-02-2001 | DE | 19938639 A1 | 22-02-2001 |
| | | | AU | 6161400 A | 13-03-2001 |
| | | | WO | 0113029 A1 | 22-02-2001 |
| DE 10033608 | A | 07-02-2002 | DE | 10033608 A1 | 07-02-2002 |
| DE 10055689 | A | 16-05-2002 | DE | 10055689 A1 | 16-05-2002 |
| DE 10113413 | A | 26-09-2002 | DE | 10113413 A1 | 26-09-2002 |
| EP 1246148 | A | 02-10-2002 | DE | 10114784 A1 | 10-10-2002 |
| | | | EP | 1246148 A2 | 02-10-2002 |